**Europäisches Patentamt**

**European Patent Office**

**Office européen des brevets**

(11) Veröffentlichungsnummer: **0 036 101**
**B1**

(12) # EUROPÄISCHE PATENTSCHRIFT

(45) Veröffentlichungstag der Patentschrift:
02.03.83

(21) Anmeldenummer: **81101255.8**

(22) Anmeldetag: **21.02.81**

(51) Int. Cl.³: **C 09 D 11/00**, B 41 M 5/00,
B 01 J 13/02

(54) **Niedrigviskose, Mikrokapseln und Bindemittel enthaltende wässrige Streich- und Druckfarben, das mit diesen Farben bedruckte und gestrichene Papier, sowie dessen Verwendung in druckempfindlichen Kopiersystemen.**

(30) Priorität: **05.03.80 DE 3008390**

(43) Veröffentlichungstag der Anmeldung:
**23.09.81 Patentblatt 81/38**

(45) Bekanntmachung des Hinweises auf die Patenterteilung:
**02.03.83 Patentblatt 83/9**

(84) Benannte Vertragsstaaten:
**AT DE FR GB**

(56) Entgegenhaltungen:
**DE-A-2 832 637**

(73) Patentinhaber: **BASF Aktiengesellschaft,
Carl-Bosch-Strasse 38, D-6700 Ludwigshafen (DE)**

(72) Erfinder: **Hoffmann, Dietrich, Assenheimer Strasse 9,
D-6701 Roedersheim-Gronau (DE)**
Erfinder: **Sliwka, Wolfgang, Dr., Diemstrasse 8,
D-6940 Weinheim (DE)**

## 0 036 101

### Niedrigviskose, Mikrokapseln und Bindemittel enthaltende wäßrige Streich- und Druckfarben, das mit diesen Farben bedruckte oder gestrichene Papier, sowie dessen Verwendung in druckempfindlichen Kopiersystemen

Mit Mikrokapseln beschichtetes Trägermaterial für kohlepapierfreie Kopiersysteme bzw. Reaktionsdurchschreibepapiere, werden üblicherweise auf Papierstreichanlagen hergestellt. Hierzu werden die Mikrokapseln enthaltenden wäßrigen Streichfarben, die in der Regel noch Bindemittel, z. B. Stärke, Polyvinylalkohol und/oder Polymerdispersionen und sogenannte Abstandshalter, wie Cellulosemehl oder Stärkekörner enthalten können, mit Hilfe der Luftbürste, der Rollrakel, des Glättschabers oder des Rollschabers vollfächig auf die Papierbahn, aufgebracht und anschießend in einem Trockenkanal getrocknet. Das so beschichtete Papier wird dann, z. B. in Druckereien bedruckt und zu Formularsätzen verarbeitet.

Da in vielen Formularsätzen nur in einem sehr kleinen Flächensegment durchgeschrieben wird, wäre es aus ökonomischer Sicht vorteilhaft, nur diese Flächensegmente mit Mikrokapseln zu versehen, z. B. durch Bedrucken und die übrige Fläche auszusparen. Damit würde auch das beim vollflächigen Beschichten auftretende Problem entfallen, diejenigen Stellen an denen ein Durchschreiben nicht erfolgen soll, durch Aufdrucken einer geeigneten Neutralisationsfarbe zu desensibilisieren.

Es hat deshalb nichts an Versuchen gefehlt, Mikrokapseln im Streifen- oder Spotdruck auf einer Unterlage aufzubringen. Diese Versuche haben aber bisher zu keinem durchgreifenden Erfolg geführt. Das Bedrucken von Papier mit Mikrokapseln enthaltenden wäßrigen Druckfarben ist bekannt. So wird in der US-A-3 016 308, Beispiel IX, das Bedrucken von Papier mit Mikrokapseln (Durchmesser $1-60\,\mu m$), die in einer wäßrigen Proteinlösung suspendiert sind, mit Hilfe von Gravurwalzen beschrieben. Nach der US-A-3 630 835 werden Kapseln mit einer Durchschnittsgröße von 7 bis 9 $\mu m$ Durchmesser gegebenenfalls zusammen mit Stärke, Talk oder Celluloseschliff in Form einer wäßrigen Dispersion mit einer speziellen Gravurwalze auf Papier gedruckt (Spalte 3, Zeile 36 bis 45). Der Feststoffgehalt der Druckfarbe liegt zwischen 18 und 24 Gew.-%, wobei der Gehalt an Kapseln 13 bis 22 Gew.-% beträgt. Nach diesem Verfahren sollen nach den Angaben in der PS 3,7 bis 5,2 g Mikrokapselbeschichtung (trocken) pro $m^2$ Fläche aufgebracht werden können.

Beide Verfahren eignen sich nur zum vollflächigen Druck. Werden nur Streifen oder Teilflächen bedruckt, dann tritt als Folge des Aufweichens des Papiers durch die wäßrige Druckfarbe nach dem Trocknen am Rand der bedruckten Fläche eine wellenförmige Papierdeformation auf. Diese führt zu Paßungenauigkeiten beim Drucken und Herstellen des Formularsatzes, die nicht akzeptabel sind.

Ein weiterer Nachteil ist, daß eine wäßrige Druckfarbe wegen der hohen Verdampfungswärme des Wassers lange Trockenkanäle erfordert, die bei normalen Druckmaschinen nicht vorhanden sind.

Ein besonders schwerwiegender Nachteil der wäßrigen Druckfarben liegt darin, daß diese für das Drucken keine optimalen rheologischen und grenzflächenaktiven Eigenschaften aufweisen. Zur Herstellung von Druck- und Streichfarben mit einer Konzentration von mindestens 20 Gew.-% an Mikrokapseln müssen die nach Verfahren des Standes der Technik erhältlichen niedrigkonzentrierten Mikrokapseldispersionen aufkonzentriert werden, z. B. durch Einengen. Da sich hierbei auch gleichzeitig die Konzentration an den aus der Herstellung stammenden wasserlöslichen hochmolekularen Verbindungen erhöht, erhält man mit diesen Mikrokapseldispersionen Druck- und Streichfarben mit zu hoher Viskosität (Auslaufzeit im DIN-4 Becher 50 bis 60 s, statt der gewünschten 10 bis höchstens 50 s).

Mit solchen Druckfarben ist eine vollständige Übertragung der Druckfarbe (z. B. von 3 bis 5 g Feststoff pro $m^2$ Fläche) vom Druckwerk auf das Papier nicht gewährleistet.

Da die Mikrokapseln in der Regel Durchmesser von 7 bis 15 $\mu m$ aufweisen und damit im Vergleich zu den in Druckfarben üblicherweise enthaltenen Teilchen wie Weiß- und/oder Buntpigmenten, sehr groß sind, resultiert beim Druck solcher Druckfarben ein ausgeprägtes rheologisches Muster: an den Stellen, an denen auf der Druckwalze Stege sind, enthält die Druckunterlage praktisch keine Farbe und damit auch praktisch keine Mikrokapseln. Letztere sind an den Stellen konzentriert, an denen die Farbe aus den Vertiefungen aufgenommen wurde. Diese Erscheinung wird durch die rheologisch ungünstigen Eigenschaften der wäßrigen Dispersion noch verstärkt. Zusätzlich treten die dem Drucker wohlbekannten Streifenmuster auf, die durch das unterschiedliche Abreißen der Farbe hinter der Walze verursacht werden und wodurch auf der Druckunterlage eine wellenrippenartige Beschichtung mit Rippenhöhen von 10 bis 15 $\mu m$ auftritt. Diese Erscheinung ist um so ausgeprägter, je größer die in der Farbe enthaltenen Teilchen sind. Das heißt auf dem nach den Druckverfahren des Standes der Technik mit Mikrokapseln bedruckten Papier liegen die Mikrokapseln nicht in homogener Verteilung sondern in Form eines groben Rasters und/oder in Streifen vor. Aus diesem Grunde erhält man bei der Durchschrift ein zerrissenes und unscharfes Schriftbild.

Für den Fall, daß es gelingen würde, Mikrokapseln enthaltende Streich- oder Druckfarben herzustellen, die bei Kapselkonzentrationen von 20 bis 40 Gew.-% eine niedrige Viskosität aufweisen, dann wäre es möglich, auch bei vollflächigem Beschichten in den vorhandenen Papierstreichanlagen mit vorhandenen Trocknungsanlagen höhere Streichgeschwindigkeiten als von bisher 300 bis 500 m/min zu erzielen, bei gleichzeitig geringeren Energiekosten je produzierter Mengeneinheit.

Aus der Drucktechnik der wäßrigen Druckfarben ist bekannt, die Viskosität durch Zusatz von niederen Alkoholen, wie Methanol, Ethanol oder Propanol, von Azeton oder von Benzin zu erniedrigen. Durch den Zusatz ändern sich die Benetzungseigenschaften der Farbe derart, daß die Farbe vollständig von dem Druckzylinder auf das zu bedruckende Material, z. B. der Papierbahn übertragen wird und dort verläuft, wodurch ein gleichmäßiges Druckbild zustandekommt.

Die bisherigen Versuche, die Viskosität von Mikrokapseln enthaltenden Druckfarben durch Zugeben von z. B. niederen Alkoholen zu senken, brachten keinen Erfolg: man erhielt ein nicht durchschreibendes Papier, dessen auf der anderen Blattseite befindliche Nehmerseite mehr oder minder gefärbt war. Die Mikrokapseln des Standes der Technik, die als Wandmaterialien Gelatine, Polyacrylate, Polyamide, Aminoharze oder Polyurethane enthalten, geben bei Anwesenheit von organischen Lösungsmitteln, z. B. niederen Alkoholen sehr schnell den eingekapselten Farbbildner frei. Das heißt, die Kapsel verarmt an Farbbildner: man erhält nicht durchschreibende Papiere. Der im Alkohol-Wasser-Gemisch gelöste Farbbildner gelangt bei rückseitiger Beschichtung von Papier mit aktiver Schicht durch Diffusion und/oder durch Migration während oder nach dem Trocknen in die aktive Clay- bzw. Nehmerschicht, wobei sich die Papiere verfärben. Dieses Problem besteht insbesondere bei kleinen und sehr kleinen Kapseln, weil diese infolge ihrer größeren Oberfläche dünnere Wände besitzen und selten dicht, insbesondere nicht dicht gegen Alkohol sind. Auch sind dadurch die Papiere mit üblichen Mikrokapseln beim anschließenden Bedrucken mit lösungsmittelhaltigen, z. B. alkoholhaltigen Druckfarben gefährdet, da nicht restlos entferntes und in das Papier eingedrungenes Lösungsmittel beim Lagern z. B. auf der Papierrolle Kapseln zerstören kann. Ein weiterer Nachteil der meisten bekannten Mikroverkapselungsverfahren in Wasser liegt darin, daß die entstehenden Dispersionen nur geringe Kapselkonzentrationen (ca. 12 bis 30%) aufweisen. Solche Dispersionen müßten vor der Alkoholzugabe aufkonzentriert werden, da mit den niedrigkonzentrierten Dispersionen nicht die notwendige Menge an Kapseln aufgebracht werden kann. Dabei steigt in der Regel — wegen der gleichzeitig auch erfolgenden Konzentrierung der aus der Herstellung der Mikrokapseln stammenden Schutzkolloide — aus die Viskosität der Dispersion.

Es wurde gefunden, daß eine stabile niedrigviskose Mikrokapseln und Bindemittel enthaltende wäßrige Druck- oder Streichfarbe vorliegt, wenn diese neben in wäßrigen Druck- und Streichfarben üblichen Hilfsmitteln

a) ein mit Wasser mischbares Lösungsmittel oder ein Lösungsmittelgemisch mit einem Siedepunkt von $\leq 100°$ C und

b) Mikrokapseln von im Mittel 1 bis 8 µm Durchmesser

enthält, die durch Kondensation von Melamin und Formaldehyd oder Melamin-Formaldehyd-Vorkondensaten in einer wäßrigen Dispersion der festen oder flüssigen, in Wasser im wesentlichen nicht löslichen, den Kern bildenden Phase in einer wäßrigen Lösung eines Sulfonsäuregruppen tragenden Homo- oder Copolymeren bei pH von 3 bis 6,5 und Temperaturen von 20 bis 100° C erhalten werden und wobei das Verhältnis von Melamin zu Formaldehyd von 1 : 1,5 bis 1 : 6 Mol, vorzugsweise 1 : 3 bis 1 : 6 Mol und das Verhältnis von Harz zu Kernmaterial 1 : 13 bis 1 : 2 ist und wobei das Sulfonsäuregruppen tragende Polymere, das frei von Phenyl- und/oder Sulfophenylgruppen ist, einen K-Wert nach Fikentscher von 100 bis 170 oder eine Viskosität von 200 bis 5000 mPs bei einem Schergefälle von 489 s$^{-1}$ in 20gew.-%iger Lösung bei 25° C aufweist.

Mit den Streich- und Druckfarben gemäß der vorliegenden Erfindung kann Papier in Spot, Streifen oder auch ganzfächig bedruckt werden, wobei praktisch keine Verformung des Papiers durch Wellen auftritt.

Die mit den erfindungsgemäßen Druck- und Streichfarben bedruckten oder gestrichenen Papiere geben in Verbindung mit CF-Schichten farbstarke und scharfe Schriftbilder liefernde druckempfindliche Kopiersysteme.

Die in den Streich- und Druckfarben der vorliegenden Erfindung enthaltenden Mikrokapseln sind gegenüber den zur Verbesserung des Verlaufs der Druckfarbe verwendeten Lösungsmittel stabil.

Legt man Papiere, die mit Mikrokapseln des Standes der Technik beschichtet sind, in ein Äthanol-Wassergemisch (1 : 1 Gew.-Teile, Dauer: 1 min und 24 h) und bestimmt an den getrockneten Proben die Intensität der Durchschrift (die Intensität der Durchschrift wurde nach den unter I. D. beschriebenen Verfahren bestimmt), dann erhält man folgendes Ergebnis:

3

| Papier | Intensität [%] | | |
|---|---|---|---|
| beschichtet mit Mikrokapseln gemäß | unbehandelt | 1 min | 24 h |
| Erfindungsgemäß | | | |
| Beispiel 1 | 40 | 40 | 40 |
| Beispiel 8a | 57 | 57 | 55 |
| DE-C-2 119 933 (Polyacrylat) | 36 | 27 | 0 |
| DE-A-1 444 415 (Polyamid) | 40 | 33 | 0 |
| DE-A-2 619 524 (Polyurethan) | 42 | 39 | 0 |
| AT-B-199 206 (Gelatine) | 38 | 26 | 0 |
| US-A-3 778 383, Beispiel 1 (Melamin-Formaldehyd-Harz) | 24 | 22 | 4 |

Die neuen Streich- und Druckfarben können z. B. nach dem Tiefdruckverfahren, dem Flexodruckverfahren, dem in der DE-A-2 833 651 (P 2 833 651.8) beschriebenen Verfahren oder mit Hilfe üblicher Papierstreichverfahren oder im Labor mit einer Kastenrakel auf dem Träger aufgebracht werden.

Die neuen Druck- und Streichfarben werden durch Mischen der wäßrigen, vorzugsweise mindestens 30 Gew.-% Feststoff enthaltenden Mikrokapseldispersion der im Anspruch 1 angegebenen Art mit dem mit Wasser mischbaren Lösungsmittel oder Lösungsmittelgemisch (a) und den weiteren in wäßrigen Streich- und Druckfarben üblichen Hilfsmitteln erhalten.

Die neuen Druck- und Streichfarben enthalten in der Regel — bezogen auf die Streich- oder Druckfarbe — 20 bis 65 Gew.-% (a) und 80 bis 35 Gew.-% der wäßrigen Mikrokapseldispersion (b1), die 30 bis 60, vorzugsweise 38 bis 55 Gew.-%, bezogen auf die Dispersion, an Feststoff enthält und ggf. weitere in diesen Farben übliche Hilfsmittel.

Bevorzugt sind Farben, die — bezogen auf die Streich- oder Druckfarbe — 30 bis 50 Gew.-% (a) und 70 bis 50 Gew.-% (b1) enthalten.

Als weitere übliche Hilfsmittel enthalten die neuen Streichfarben — bezogen auf die Mikrokapseldispersion (b1) — ggf.

c) bis zu 2,5 Gew.-% an Dispergiermitteln,
d) bis zu 30 Gew.-% an Abstandshaltern,
e) bis zu 15 Gew.-% eines zusätzlichen in der Streich-/Druckfarbe löslichen oder dispergierbaren Bindemittels für die Mikrokapseln und/oder
f) bis zu 2,5 Gew.-% Polyäthylenglykol vom Molekulargewicht von 1000 bis 3000.

Die neuen Druck-/Streichfarben haben eine Auslaufzeit — gemessen im DIN-4-Becher von 10 bis 50, vorzugsweise von 11 bis 25 Sekunden.

Als mit Wasser mischbare Lösungsmittel (a) kommen z. B. $C_1$- bis $C_3$-Alkanole, wie n-Propanol, Isopropanol, Äthanol, Methanol, Aceton, Methyläthylketon und Tetrahydrofuran in Betracht. Für (a) sind Methanol und Äthanol bevorzugt. Die Menge an (a) beträgt, bezogen auf 100 Gew.-Teile der wäßrigen Mikrokapseldispersion, 25 bis 185, vorzugsweise 42 bis 100 Gew.-Teile.

Die Mikrokapseln (b) werden vorzugsweise in Form der bei der Herstellung anfallenden wäßrigen Dispersionen verwendet. Die für die erfindungsgemäßen Streich- und Druckfarben zu verwendenden Mikrokapseln haben im Mittel Durchmesser von 1 bis 8, vorzugsweise von 2 bis 6 μm und werden durch Kondensation von Melamin mit Formaldehyd, von Melamin-Formaldehyd-Vorkondensaten, von deren Methyl- oder Äthyläthern oder Gemischen davon in einer wäßrigen Dispersion des den Kern bildenden

4

nichtwasserlöslichen Materials in einer wäßrigen Lösung eines Sulfonsäuregruppen tragenden Homo- oder Copolymeren bei pH 3 bis 6,5, vorzugsweise 3,8 bis 4,5 und Temperaturen von 20 bis 100°C erhalten. Das Verhältnis von Melamin zu Formaldehyd beträgt 1 : 1,5 bis 1 : 6, vorzugsweise 1 : 3 bis 1 : 6 und das von Kondensationsharz zu Kernmaterial 1 : 13 bis 1 : 2, vorzugsweise 1 : 10 bis 1 : 2,5.

Das in der kontinuierlichen wäßrigen Phase gelöste Sulfonsäuregruppen enthaltende Polymere ist frei von Phenyl- und/oder Sulfophenylgruppen. Es weist einen K-Wert nach Fikentscher von 100 bis 170 oder eine Viskosität von 200 bis 5000 mPs bei einem Schergefälle von 489 s$^{-1}$ (gemessen in 20gew.-%iger Lösung bei 25°C) auf. Zur Herstellung der Mikrokapseln werden zweckmäßigerweise Melamin und Formaldehyd bzw. das Vorkondensat so langsam zu der wäßrigen Dispersion gegeben, daß keine Gelierung im Verlauf der Kondensation eintritt.

Als wasserlösliche, Sulfonsäuregruppen tragende Polymere kommen z. B. in Betracht: Homo- oder Copolymerisate auf der Basis von 2-Acrylamido-2-methyl-propansulfonsäure, Sulfoäthyl(meth)-acrylat, Sulfopropyl(meth)-acrylat, Maleinimid-N-äthansulfonsäure oder Copolymerisate aus mindestens 70 Gew.-% 2-Acrylamido-2-methyl-propansulfonsäure und bis zu 30 Gew.-% Acrylsäureestern, oder Copolymerisate der oben genannten Sulfonsäuregruppen tragenden Monomeren mit N-Vinylpyrrolidon, wobei das Copolymere mindestens 5 Gew.-% des Sulfonsäuregruppen tragenden Comonomeren enthält. Die Sulfogruppen enthaltenden Polymeren werden vor allem in Form der Alkalimetallsalze, insbesondere der Natriumsalze angewendet. Als wasserlösliches Polymeres ist Poly-2-acrylamido-2-methyl-propansulfonsäure bevorzugt, insbesondere solches mit einem K-Wert von 115 bis 160.

Die Menge an dem wasserlöslichen Sulfonsäuregruppen tragenden Polymeren liegt zwischen 1,0 und 5,5, vorzugsweise zwischen 1,5 und 4,5 Gew.-%, bezogen auf die zur Herstellung der Mikrokapseln verwendete wäßrige Phase.

Die Herstellung der für die erfindungsgemäßen Streich- und Druckfarben verwendeten Mikrokapseldispersionen erfolgt nach dem in der europäischen Patentanmeldung 80 105 934.6 beschriebenen Verfahren.

Als Dispergiermittel (c) kommen die in Papierstreichfarben üblicherweise verwendeten wasserlöslichen niedermolekularen Carboxylgruppen enthaltenden Polymere in Betracht, z. B. Poly(meth)-acrylsäure mit K-Werten nach Fikentscher von 16 bis 60, Copolymere der Acrylsäure mit Vinylsulfonsäure oder mit Acrylamid und Copolymere der Maleinsäure mit Isobutylen, Vinylmethyläther oder Äthylen. Für (c) kommen außerdem Alkalimetallpolyphosphate in Betracht.

Durch den Zusatz von (c) kann in vielen Fällen die Viskosität der Streich-/Druckfarbe noch weiter gesenkt werden. So wird z. B. die Auslaufzeit einer Farbe aus 100 Gew.-Teilen einer 43gew.-%igen Mikrokapseldispersion und 60 Gew.-Teilen Methanol durch Zugeben von 1,6 Gew.-Teilen polyacrylsaurem Natrium (K-Wert: 20) um etwa 10% gesenkt. Im Falle einer Farbe, die anstelle des Methanols die gleiche Menge Isopropanol enthält, wird die Auslaufzeit um 20% gesenkt. Die Menge an (c) kann bis zu 2,5, vorzugsweise bis zu 1,5 Gew.-%, bezogen auf die angewandte Menge der Mikrokapseldispersion, betragen. Die optimale Menge (c) kann durch einfaches Ausprobieren und Bestimmen der Auslaufzeit aus dem DIN-4-Becher bestimmt werden.

Die Druck-/Streichfarben können weiterhin die in Mikrokapseln enthaltenden Streichfarben üblichen Abstandshalter (d) enthalten. Letztere sollen verhindern, daß Mikrokapseln bereits beim Gegeneinanderreiben, z. B. bei Formularsätzen zerstört werden. Als Abstandshalter werden üblicherweise z. B. Celluloseschliff, Stärke oder Protein in Form von Körnern oder Teilchen aus vernetzten Harnstoff-Formaldehyd-Harzen verwendet. Um optimale Wirkung zu erzielen, sollen die Körner im Mittel einen etwas größeren Durchmesser haben als die zu schützenden Mikrokapseln. Während bei Streichfarben die körnigen Abstandshalter und Celluloseschliff gleich gut verwendbar sind, sind für Druckfarben die körnigen Abstandshalter bevorzugt. Der Anteil der Mittel (d) kann bis zu 30 Gew.-%, bezogen auf die Mikrokapseldispersion, betragen. Vorteilhafterweise beträgt die Menge (d), bezogen auf den Feststoffgehalt der Mikrokapseldispersion, 10 bis 40 Gew.-% oder, bezogen auf die wäßrige Mikrokapseldispersion, 3 bis 18 Gew.-%.

Das Bindemittel (e) dient dazu, die Mikrokapseln auf dem Papier zu verankern. Hierfür sind praktisch alle in Wasser bzw. in dem verwendeten Wasser/Lösungsmittel-Gemisch löslichen oder dispergierbaren Polymeren verwendbar. In vielen Fällen reicht das in der Mikrokapseldispersion enthaltene, aus der Herstellung stammende Schutzkolloid in der Menge aus. Man kann aber der Farbe zusätzlich noch bis zu 15 Gew.-%, bezogen auf die Mikrokapseldispersion, einer harte oder weiche Filme bildenden Polymerdispersion zusetzen, wobei von einer weiche Filme bildenden Polymerdispersion auch noch mehr als 15 Gew.-% zugegeben werden können.

Als Bindemittel (e) kommen z. B. in Betracht: Polyvinylpyrrolidon, Poly-2-acrylamido-2-methyl-propansulfonsäure (in Form der Salze), Copolymere aus N-Vinylpyrrolidon und 2-Acrylamido-2-methyl-propansulfonsäure oder Vinylsulfonsäure (Salze), Copolymere aus mindestens 70 Gew.-% 2-Acrylamido-2-methyl-propansulfonsäure und bis zu 30 Gew.-% $C_1$- bis $C_4$-Alkylacrylaten und/oder Hydroxypropylacrylat, in dem Wasser-Lösungsmittel-Gemisch beständige Polymerdispersionen von Styrol/Butadien und/oder Alkylacrylat-Copolymerisaten oder Polyacrylaten. Man kann auch übliche in Druckfarben verwendete Bindemittel verwenden, wenn diese in dem Wasser-Lösungsmittel-Gemisch der Farben anwendbar sind.

Weiterhin kann die Druck-/Streichfarbe noch — bezogen auf die verwendete Mikrokapseldispersion — bis zu 2,5 Gew.-% Polyäthylenglykol (f) vom Molekulargewicht 1000 bis 3000 enthalten. Der Zusatz an (f) verhindert, daß durch evtl. beim Auftragen zerstörte Mikrokapseln eine Färbung des beschichteten Papiers durch diffundierenden Farbbildner erfolgt. Für den genannten Zweck ist festes Polyäthylenglykol bevorzugt geeignet.

Die Streich-/Druckfarbe gemäß der Erfindung kann außerdem noch (g) geringe Mengen an Toluol, Xylol und/oder Benzin enthalten. Die Mengen sind so abgestimmt, daß diese Mittel in der wäßrigen (a) enthaltenden Phase gelöst sind.

Die Mengen an (g) können bis zu 5 Gew.-%, bezogen auf die Druck-/Streichfarbe, betragen. Der Zusatz an (g) bewirkt in einigen Fällen eine Verbesserung des Verlaufs der aufgetragenen Farbe.

Die Druck-/Streichfarben der vorliegenden Erfindung werden im allgemeinen so hergestellt, daß man die Mikrokapseln in Form der wäßrigen Dispersion vorlegt und (a) in dem ggf. das Bindemittel (e) und ggf. die weiteren Zusätze gelöst sind, unter Rühren untermischt. Werden Abstandshalter (d) verwendet, werden diese vorteilhafterweise zuerst in die Mikrokapseldispersion eingerührt und dann erst die weiteren Zusätze. Die Reihenfolge der Zugabe der Zusätze (c), (e) und (f) ist in der Regel nicht kritisch. Die optimale Reihenfolge kann jedoch durch einfache Reihenversuche rasch ermittelt werden.

Die Erfindung soll durch die folgenden Ausführungsbeispiele weiter erläutert werden.

Im folgenden beziehen sich die Teile und Prozente auf das Gewicht. Die Prüfung der Viskosität erfolgte im Fall der Druck- oder Streichfarbe nach der DIN-Methode mit dem Auslaufbecher mit einer 4 mm Düse. Die Auslaufzeit wird in Sekunden [s] angegeben. Die K-Werte wurden nach Fikentscher (Cellulosechemie 13 (1932), 58 ff) 1%ig in Wasser bestimmt. Die Viskosität der Kapseldispersionen wurde mit dem Brookfield-Viskosimeter und die Viskosität der Lösungen der wasserlöslichen, Sulfonsäuregruppen enthaltenden Polymeren an 20gew.-%igen wäßrigen Lösungen bei 25°C im ®Rheomat 30 bei einem Schergefälle von 489 $s^{-1}$ gemessen.

Die in den verwendeten Mikrokapseldispersionen enthaltenen Mikrokapseln und die in den Streich-/Druckfarben enthaltenen Mikrokapseln wurden in folgender Weise auf Dichtigkeit und auf Intensität der Durchschrift geprüft.

I. Prüfung der Mikrokapseln auf Dichtigkeit und auf Intensität der Durchschrift.

A. Die zur Herstellung der Druck-/Streichfarbe verwendete wäßrige Mikrokapseldispersion wird mit Wasser auf 16,5% Feststoffgehalt verdünnt und mit einem Drahtrakel

1) auf normales Schreibmaschinenpapier,
2) auf ein mit aktivem Clay beschichtetes Blatt (CF-Blatt) eines Reaktionsdurchschreibepapiers gestrichen und die Papiere getrocknet.
Der Auftrag der Mikrokapseln liegt bei 5 g Mikrokapseln pro m² Papierfläche.

B. 100 Teile Kapseldispersion (Feststoffgehalt ca. 40 Gew.-%) werden mit 65 Teilen Methanol verdünnt und diese Dispersion sofort, sowie nach einer Lagerung von 24 und 48 h mit einer Lackhantel (Spaltweite 30 μm)

1) auf normales Schreibmaschinenpapier,
2) auf ein mit aktivem Clay beschichtetes Blatt (CF-Blatt) eines Reaktionsdurchschreibepapiers aufgebracht und die Papiere getrocknet. Der Auftrag an Mikrokapseln liegt bei 5 g/m² Papierfläche.

C. Prüfung auf Dichtigkeit
1) Die nach A2) auf das CF-Blatt gestrichenen Mikrokapseln geben nach Trocknen eine mehr oder minder geringe Anfärbung der Clayschicht auf dem Papier, die durch nicht eingekapselte Farbbildner verursacht wird. Man kann den außerhalb der Mikrokapseln sitzenden Farbbildner sofort auf dem CF-Blatt in den Farbstoff überführen, wenn man das mit den Kapseln beschichtete Papier z. B. mit Dodecylbenzol besprüht und trocknet. Die Färbung der so behandelten CF-Blätter wurde als Differenz der Reflexion des nicht besprühten und des besprühten Blattes in relativen Einheiten in % angegeben, wobei die Reflexion des Weißstandards 100% ist. Die Reflexionsmessungen wurden mit dem Reflexionsphotometer ®ELREPHO der Fa. Zeiss durchgeführt. Die gemessene Färbung wird als JCF bezeichnet und in % angegeben.
2) Die nach B2) aufgebrachten Mikrokapseln, liefern, falls Farbbildner außerhalb der Kapseln vorhanden sind, unmittelbar (d. h. ohne Besprühen mit Dodecylbenzol) eine Verfärbung der CF-Schicht. Die Verfärbung wird hier als JCFA bezeichnet und entweder entsprechend C1) photometrisch bestimmt oder in Noten angegeben. Dabei bedeuten Note 6 = farblos, 5 = leichter Farbstich, 4 = deutlicher Farbstich, 3 = verfärbt, 2 = stark verfärbt, 1 = intensiv gefärbt.

D.  Intensität der Durchschrift
    Die nach A1) und B1) beschichteten Blätter wurden mit der beschichteten Seite auf ein CF-Blatt und dann darüber 7 Lagen Papier von ca. 38 g/m² gelegt. Dieser Stapel wurde in eine elektrische Schreibmaschine eingespannt und mit der größten Anschlagstärke ein Feld von 4,2 × 3,4 cm mit den Buchstaben kleines w beschrieben, wobei die Buchstaben in der Zeile unmittelbar aneinandergereiht und die Zeilen dicht übereinander angeordnet sind. Die Intensität der erhaltenen achten Durchschrift wurde als Differenz der Reflexion des unbeschriebenen und des beschriebenen CF-Blattes in einem Reflexionsphotometer (®ELREPHO, Fa. Zeiss) gemessen und in relativen Einheiten in % angegeben, wobei die Reflexion des Weißstandards gleich 100 ist. Die Intensität der mit dem nach A1) beschichteten Blatt erhaltenen Durchschrift wird als ID und die Intensität der mit dem nach B1) beschichteten Durchschrift als IDA bezeichnet.

II. Herstellung der verwendeten Mikrokapseln

1.  Mikrokapseldispersion 1
    In einem zylindrisch geformten 4 l Rührgefäß mit einem eingebauten Dispergator (®Turrax 45 N, der Fa. Jahnke & Kunkel) werden 908 g Wasser und 200 g einer 20%igen Lösung von Poly-2-acrylamido-2-methylpropansulfonsäure/Natriumsalz (Viskosität: 1030 mPas, K-Wert: 129) gemischt (= kontinuierliche wäßrige Phase), die Mischung mit Ameisensäure auf pH 4,5 gestellt und auf 60° C erhitzt. In der wäßrigen Lösung werden dann bei einer Umdrehungsgeschwindigkeit von 8000 Upm 800 g partiell hydriertes Terphenyl, das 28,5 g Kristallviolettlacton und 9,5 g N-Benzoylleukomethylenblau gelöst enthält, dispergiert. Zu der erhaltenen stabilen, farblosen Dispersion wird dann innerhalb von 60 min gleichmäßig eine auf pH 4,5 gestellte Lösung aus 120 g eines in Wasser klarlöslichen, partiell methylierten Vorkondensats (enthält ca. 2,3 CH$_3$O-Gruppen pro Melaminmolekül) aus 1 Mol Melamin und 5,25 Mol Formaldehyd in 132 g Wasser bei 60° C zugegeben. Nach ca. 30 min konnte in einer Probe unter dem Mikroskop die Kapselbildung festgestellt werden: die Emulsionströpfchen liefen auf dem Objektträger nicht mehr zusammen. Nach insgesamt 65 min wird die entstandene Mikrokapseldispersion mit einem Propellerrührer (500 Upm) bei 60° C noch 3,5 h nachgerührt. Die Dispersion wird dann abgekühlt, auf pH 7,0 eingestellt und über ein Sieb von 40 µ Maschenweite gesiebt, wobei ein Rückstand von ca. 0,7 g Feststoff anfällt. Bereits nach 120 min (ab Beginn der Zugabe des Vorkondensats) sind die Kapseln so weit ausgehärtet, daß ein Aufstrich der Dispersion auf einer mit Kieselgel beschichteten Dünnschichtchromatographieplatte nach dem Trocknen keine Blaufärbung mehr gibt.
    Die erhaltene Dispersion ist farblos milchig, und enthält nach der mikroskopischen Beurteilung Einzelkapseln von vorwiegend 2 bis 6 µm Durchmesser. Im Coulter-Counter TF gemessen ist die häufigste Teilchengröße (Zahlenmittel) 3,3 µm bei einer Halbwertsbreite von 1,8 bis 4,8 µm der größte Teilchendurchmesser beträgt 9 µm. Die Viskosität beträgt 130 mPas (gemessen im Brookfieldviskosimeter), Feststoffgehalt: 39,9%.
    Die erhaltenen Mikrokapseln wurden nach I auf Dichtigkeit und Intensität der Durchschrift geprüft: Die Dichtigkeitsprüfung nach A1) und C1) ergab einen JCF-Wert von 0%. Die Intensitätsprüfung nach D ergab eine gut lesbare achte Kopie mit einem ID-Wert von 50%.
    Die Dichtigkeitsprüfung nach B2) und C2) ergab für JCFA die Noten 5, 4−5 und 4−5 (sofort, Lagerzeit 24 und 48 h).

2.  Mikrokapseldispersion 2
    Die Dispersion wurde nach Beispiel 4 der DE-OS 2 757 528 hergestellt. In einem zylindrischen Glasgefäß mit Propellerrührer und an der Glaswand angebrachten 3 Stromstörern werden bei 1500 Upm 400 g des in II.1) angegebenen Kernmaterials in einer Lösung von 24 g Polyacrylsäure/Natriumsalz (Molekulargewicht 5000; K-Wert: 35; Viskosität: 134 mPas) in 580 g Wasser emulgiert. Der pH-Wert wird auf 5,1 gestellt und die Emulsion auf 55° C erwärmt. Bei dieser Temperatur werden 93,2 g einer klaren Lösung eines Melamin-Formaldehyd-Vorkondensats, das mit Wasser in jedem Verhältnis klar mischbar ist, in ca. 2 min zugegeben. Der pH-Wert wird sofort nach der Zugabe auf pH 5,1 gestellt und die Dispersion 22 h bei 55° C und pH 5,1 gerührt. Die Dispersion wird dann neutralisiert, abgekühlt und gesiebt (44 g Siebrückstand). Feststoffgehalt: 37,9%; Viskosität: 65 mPas. Die Teilchen haben eine Größe zwischen 3 und 40 µm. Die kleinen Teilchen sind stark agglomeriert.
    Im Gefäß verblieben ca. 12 g eines festen Belages und freie Öltröpfchen. Wird die Dispersion auf 16,5% Feststoffgehalt verdünnt und auf Kieselgel aufgetragen, wird dieses beim Trocknen stark angefärbt. Die Prüfung auf Papier nach B2) und C2) ergab eine JCFA-Benotung von 1,1 und 1 (sofort, 24 und 48 h).
    Bei Verwendung von intensiver wirkenden Mischmaschinen koagulierte stets das Reaktionsgemisch, so daß auf diesem Weg keine kleineren Teilchen (Kapseln) erhalten werden konnten.

3. Mikrokapseldispersion 3

Es wird bei der Herstelldung der Kapseldispersion wie in II, 1) verfahren, jedoch wurden a) der pH-Wert der vorgelegten Emulsion während des Zulaufs des Vorkondensats und danach auf 4,0 und die Temperatur auf 35°C gehalten, b) das Vorkondensat in einem Zeitraum von 240 min gleichmäßig zugegeben und c) als Kernmaterial 800 g einer Lösung aus

| | |
|---|---|
| 9,3 g | 3'-Phenyl-7-N-dimethyl-spirodibenzopyran, |
| 22,65 g | 2,6-Diphenyl-4-(4'-dimethylaminophenyl)-pyridin, |
| 9,35 g | 3-Dibutylamino-5-diäthylamino-2,4-diazarhodaminlacton, |
| 6,13 g | N-Benzoylleukomethylenblau und |
| 0,40 g | Kristallviolettlacton in 752,17 g Dodecylbenzol verwendet. |

Zu 1000 Teilen dieser Dispersion werden zur Verhinderung des Absetzens bei der Lagerung 4 Teile einer 24%igen Polymerdispersion eines teilweise carboxylgruppenhaltigen Polymerisates (DE-C-2 217 696, Beispiel 1, Versuche 8 bis 11) zugegeben und die Mischung anschließend neutralisiert, wobei die Viskosität (134 mPas, gemessen als Auslaufzeit im DIN-Becher, von 25 s auf 45 s ansteigt. Die Kapseldispersion besitzt einen Feststoffgehalt von 41% und enthält Einzelkapseln mit einem häufigsten Durchmesser von 4,95 µm, gemessen im Coulter-Counter TF. Die Halbwertsbreite liegt zwischen 2,0 und 7,3 µm. Die Durchschrift ist schwarz. Die Kapseln werden nach I. auf Dichtigkeit und Intensität der Durchschrift geprüft: die Dichtigkeitsprüfung nach A1) und C1) ergab einen ICF-Wert von 0%. Die Intensitätsprüfung nach D ergab eine gut lesbare achte Kopie mit einem ID-Wert von 51%. Die Prüfung nach C2) wurde mit 5, 4 – 5 und benotet.

4. Mikrokapseldispersion 4

In einem zylindrischen 4 l Rührgefäß mit einem eingebauten Dispergator (Rührwelle, 6500 Upm mit Disperser-Scheibe, Durchmesser 6 cm, an deren Rand senkrecht zur Scheibenebene Zähne jeweils im Wechsel einmal nach oben, einmal nach unten stehend) wird eine Lösung aus 160 g einer 20%igen Lösung von Poly-2-acrylamido-2-methylpropansulfonsäure/Natriumsalz (Viskosität der 20%igen Lösung 880 mPas, K-Wert 129) mit 690 g Wasser gemischt, die Mischung mit Ameisensäure auf pH = 4,0 gestellt und auf 60°C erhitzt. In der wäßrigen Lösung werden dann 800 g der bei II, 3) angegebenen Kernmateriallösung bei 6500 Upm emulgiert. Zu dieser Emulsion werden in 60 min eine Lösung aus 121 g eines in Wasser klarlöslichen, partiell methylierten Vorkondensats (ca. 2,3 $CH_2O$-Gruppen pro Melaminmolekül) aus 1 Mol Melamin und 5,25 Mol Formaldehyd in 132 g Wasser bei 60°C zugegeben, wobei der pH auf 4,0 gehalten wird. Nach Zulaufende wird noch 5 min die hohe Drehzahl aufrecht erhalten, dann wird die Drehzahl auf 2000 Upm zurück genommen und der Ansatz bei 60°C 3 Std. nachgehärtet. Danach wird gekühlt und mit Triäthanolamin auf pH = 7,0 gestellt. Die Siebung über ein Sieb mit 40 µm Maschenweite ergibt keinen Rückstand.

Die erhaltene Dispersion ist farblos milchig und enthält nach der mikroskopischen Beurteilung Einzelkapseln von vorwiegend 2 – 3 µm Durchmesser. Im Coulter-Counter TF ergibt sich ein häufigster Teilchendurchmesser von 2,86 µm und die Halbwertsbreite zu 1,3 – 4,3 µm. Der maximale Durchmesser ist 8 µm. Die Viskosität der Dispersion beträgt 664 mPas, ihr Feststoffgehalt 48,7%.

Die Prüfung auf Papier nach A1) und C1) ergibt einen ICF-Wert von 0%, die Intensitätsprüfung nach D zeigte eine verhältnismäßig sehr scharfe, gut lesbare Schrift mit einem ID-Wert der achten Kopie von 51%.

5. Mikrokapseldispersion 5

Es wurde genau wie bei II, 4) gearbeitet, jedoch werden statt 690 g hier 940 g Wasser verwendet. Die erhaltene Dispersion ist farblos milchig und enthält nach der mikroskopischen Beurteilung Einzelkapseln von vorwiegend 2 – 4 µm Durchmesser, der Coulter-Counter TF mißt einen häufigsten Kapseldurchmesser von 3,0 µm mit einer Halbwertsbreite von 1,2 – 4,4 µm und größten Teilchen von 11 µm. Die Viskosität der Dispersion: 135 mPas; Feststoffgehalt: 42,0%.

Die Prüfung auf Papier nach A1) und C1) ergibt einen ICF-Wert von 0%, die Intensität der 8. Durchschrift beträgt ID = 51%. Die Buchstaben sind scharf begrenzt und gut zu lesen, das trifft im besonderen Maße für die 1. Kopie zu.

III. Drucken der Mikrokapseln enthaltenden Farben

1. Die Lösungsmittel enthaltenden Druck- oder Streichfarben wurden auf dem Tiefdruckwerk ®Rototest 151 der Firma Moser, Lyss (Schweiz) auf Papier gedruckt. Die Maschine hat eine pneumatische Presseuranstellung. Die Druckgeschwindigkeit kann zwischen 10 und 150 m/min variiert werden. Die Druckbedingungen wurden so ausgewählt, daß an dem bedruckten Papier im

Auftrag keine Schädigung der Mikrokapseln festgestellt werden konnte.

Es wurden Tiefdruckzylinder aus Metall mit 60 Linien/cm mit Rastertiefen von 40, 34, 24 und 7 µm verwendet.

Die Druckgeschwindigkeit wurde so abgestimmt, daß ein für den vorgesehenen Zweck ausreichender Auftrag erzielt wird. Für druckempfindliche Kopiersysteme werden Auftragsmengen von 3 bis 7 g Mikrokapseln/m² als ausreichend angesehen.

2. Streifenförmige Aufträge wurden im Flexodruck oder mit einer Kastenrakel aufgebracht. Nach dem Trocknen wurde die gleichmäßige Planlage des beschichteten Papiers mit Noten von 5 (sehr gut) bis 1 (sehr schlecht, stark wellige Ränder) beurteilt.


Beispiele 1 bis 4

Druckfarben

\) Konzentrat

In 40 Teile Mikrokapseldispersion 1 werden unter Rühren 2 Teile einer kalibrierten Stärke als Abstandshalter und 0,05 Teile Polyacrylsäure/Natriumsalz (K-Wert: 25) eingetragen und gelöst ( = Konzentrat).

ʃ) Druckfarbe

Aus diesem Konzentrat (42,05 Teile) werden durch zumischen von Lösungsmittel (a) und Bindemitteln (e) und gegebenenfalls Polyäthylenglykol (f) die gebrauchsfertigen Druckfarben erhalten. Die Mengen an (a), (e) und (f) sind in der folgenden Tabelle I angegeben.

Die Druckfarben 1 bis 3 wurden mit einer Geschwindigkeit von 40 m/min auf einem Labortiefdruckwerk (®Rototest 151) auf der Rückseite eines CF-Papiers gedruckt (Rastertiefe 40 µm). Es wurde eine glatte, praktisch streifenfreie Beschichtung erhalten. Auf der mit der CF-Schicht versehenen Seite waren keine Farbspuren zu erkennen. Die aufgebrachte Menge und das Ergebnis der Prüfung der achten Durchschrift nach I. D) ist in der Tabelle I angegeben. Verwendet man für den Druck Walzen mit geringerer Rastertiefe so wird die aufgebrachte Menge geringer. Dementsprechend nimmt auch die Intensität der Durchschrift ab. Mit der Farbe 1 erhält man beim Druck mit verschieden tiefen Rastern die folgenden Intensitäten bei der achten Durchschrift:

| Rastertiefe [µm] | IDA (nach I.D.) [%] |
| --- | --- |
| 40 | 42 |
| 34 | 39 |
| 24 | 11 |
| 7 | 1 |

9

Tabelle I

| Druckfarbe | | | | | | Druck (Rastertiefe 40 µm) | |
|---|---|---|---|---|---|---|---|
| Beisp. = Farbe | Lösungsmittel [Teile] | Bindemittel [Teile] | Polyäthylenglykol [Teile] | MG[1] | Viskosität[2] [s] | Auftrag [g/m²] | Intensität IDA [%] |
| 1 | 22,5 Äthanol (99,5%) | 0,5 Polyvinylpyrrolidon (K-Wert 30) | 0 | | 14,9 | 3,5 | 42 |
| 2 | 22,5 Äthanol (99,5%) | 0,5 desgl. | 0 | | 14,6 | 3,0 | 39 |
| 3 | 22,5 Äthanol (99,5%) | 0,5 desgl. | 0,5 | 1500 | 15,0 | 3,5 | 44 |
| 4 | 22,5 Isopropanol | 0,5 desgl. | 0 | | 40 | 3,2 | 43[1] |

[1]) Schwach gerastert.
[2]) DIN-Becher mit 4 mm Düse.

0 0 3 6 1 0 1

### Beispiel 5

a)  Druckfarbe
In 40 Teile Dispersion 1 (hergestellt nach II.1)) werden zunächst 4 Teile kalibrierte Stärke (Amylum) und dann eine Lösung von 0,5 Teilen Polyacrylsäure/Natriumsalz (K-Wert: 25), 0,5 Teilen Polyvinylpyrrolidon (K-Wert: 30) und 0,5 Teilen Polyäthylenoxid (Mg 1500) in 22,5 Teilen Äthanol (99,5%ig) eingerührt. Die Farbe wird 4 Tage bei Raumtemperatur gelagert. Viskosität: 17,5 s.
Die Farbe wurde nach III.1) auf die Unterseite eines handelsüblichen CF-Papiers bedruckt. Papiergewicht: 45 g/m; Druckgeschwindigkeit: 40 m/min; Trocknung: 110 C im Trockenkanal. Man erhält eine glatte praktisch streifenfreie, farblose Beschichtung.

b)  Die Prüfung auf evtl. beim Drucken zerstörte Mikrokapseln erfolgte nach dem unter I.C.1) angegebenen Verfahren, jedoch wurde auf jeweils einem Bogen einmal die CF-Schicht und einmal die mit Kapseln beschichtete Seite mit Dodecylbenzol besprüht und die Bogen getrocknet. Es entstand eine unterschiedlich schwache Verfärbung auf der CF-Seite, je nach dem ob die CF- oder die Kapselseite besprüht wurde. Außerdem wurde an dem wiedergetrockneten Bogen die Intensität der Durchschrift nach I.D) bestimmt, wobei hier auch noch die Intensität der ersten Durchschrift bestimmt wurde. Die Prüfergebnisse sind in der Tabelle II zusammengestellt.

Tabelle II

| Rasterwalze (60 Linien/cm) Rastertiefe | ICFA | | IDA | |
|---|---|---|---|---|
| | CF-seite | Druck-seite | 1. | 8. |
| | | | Durchschrift | |
| [μm] | [%] | [%] | [%] | [%] |
| 40 | 3 | 8 | 31 | 40 |
| 34 | 2 | 6 | 27 | 36 |
| 24 | 1 | 4 | 8 | 9 |
| 7 | 0 | 0 | 0 | 0 |

Die Prüfung auf Planlage wurde nach III.2) durchgeführt. Hierzu wurde ein 6 cm breiter Streifen mit einer Kastenrakel (Spalt: 30 μm) auf die Unterseite von CF-Papier aufgetragen. Nach dem Trocknen zeigt das Blatt am Rand des Auftrags auf der unbeschichteten Fläche nur ganz schwache Wellen (Note: 4). Die Beschichtung ist sehr glatt.

Bringt man die Farbe in Spots in einem Druckwerk unter Spannung auf, so erhält man ein ganz glattes Papier.

Die Beschichtung mit der Kastenrakel entspricht dem Auftragsverfahren der Papierstreichmaschine. Die Prüfung des Papiers ergab ein Auftragsgewicht von 7,8 g/m$^2$ und einen IDA-Wert nach D von 49%. Der Auftrag mit der Kastenrakel auf die Nehmerseite eines CF-Papiers ergab einen ICFA-Wert der Note 5.

Die Alkohol enthaltenden Streichfarben können mit den üblichen Streichmaschinen aufgebracht werden, wobei durch die günstigen Verlaufseigenschaften glatte Oberflächen erzielt werden.

### Beispiel 6
### (Vergleich)

a)  Die Druckfarbe wird wie im Beispiel 5 hergestellt, jedoch werden 40 Teile der Mikrokapseldispersion 2 (hergestellt nach II.2)) verwendet. Lagerung: 4 Tg. Viskosität: 13 s.
Die Farbe wird nach III.1) auf die Rückseite eines CF-Papiers gedruckt. Papiergewicht: 45 g/m$^2$; Druckgeschwindigkeit: 40 m/min. Man erhält eine glatte, praktisch streifenfreie Beschichtung, die bläulich gefärbt ist. Die CF-Seite ist blau gefärbt.

b)  Die Prüfung erfolgt entsprechend Beispiel 5b). Die Ergebnisse sind in der Tabelle III zusammengefaßt.

**0 036 101**

Tabelle III

| Rasterwalze Rastertiefe | JCFA | | IDA | |
|---|---|---|---|---|
| | CF-seite | Druck-seite | 1. Durchschrift | 8. |
| [$\mu$m] | [%] | [%] | [%] | [%] |
| 40 | 30 | 34 | 4[1] | 3[2] |
| 34 | 28 | 32 | 3[1] | 2[2] |
| 24 | 2 | 6 | 0 | 0 |
| 7 | 0 | 0 | 0 | 0 |

[1]) Stark gerastert, nicht mehr sicher lesbar.
[2]) Nicht mehr lesbar.

Die Prüfung auf Planlage nach III.2) gab die Note 4.

## Beispiel 7
## (Vergleich)

Stellt man nach Beispiel 5 eine Druckfarbe her, bei der das Äthanol durch die gleiche Menge Wasser ersetzt wird, dann erhält man eine Farbe mit einer Viskosität von 14,4 s. Die Farbe wird 4 Tage bei 20 bis 25 C gelagert und dann nach III.1) auf CF-Papier gedruckt. Man erhält eine farblose, jedoch nicht ganz glatte, streifige Beschichtung. Die Prüfung erfolgte wie im Beispiel 5 unter b). Das Ergebnis ist in der Tabelle IV zusammengefaßt.

Tabelle IV

| Rasterwalze Rastertiefe | JCFA | | IDA | |
|---|---|---|---|---|
| | CF-seite | Druck-seite | 1. Durchschrift | 8. |
| [$\mu$m] | [%] | [%] | [%] | [%] |
| 40 | 3 | 8 | 27[1] | 35[2] |
| 34 | 2 | 6 | 23[1] | 29[2] |
| 24 | 1 | 4 | 6[1] | 7[2] |
| 7 | 0 | 0 | 0 | 0 |

[1]) Lesbar, Schriftzug gerastert.
[2]) Nicht lesbar, kein zusammenhängender Schriftzug.

Prüfung auf Planlage nach III.2): nicht nur die unbeschichtete, sondern auch die beschichtete Papierfläche ist wellig verformt. Note: 2.
Wie der Vergleich mit Beispiel 5 zeigt, wird die Bildung von Streifen und Rastern durch den Zusatz von Lösungsmitteln verhindert, wodurch scharfe Durchschriften erhalten werden. Gleichzeitig wird die Papierverformung stark vermindert.

12

## 0 036 101

### Beispiel 8

a) Es wird eine Druckfarbe hergestellt, indem man zuerst in 58,9 Teile Mikrokapseldispersion 3 (hergestellt nach II.3), 6,0 Teile kalibrierte Stärke (Spezialstärke K der Fa. G. R. Amylum) und 0,7 Teile einer 40%igen Lösung von polyacrylsaurem Natrium (K-Wert 25) einträgt und homogen rührt. Zu dieser Mischung wird eine Lösung aus 33 Teilen Äthanol (99,5%), 0,7 Teilen Polyvinylpyrrolidon (K-Wert 30) und 0,7 Teilen Polyäthylenglykol (M 1500) unter Rühren zugegeben

Die Viskosität der Druckfarbe beträgt 16 s (gegenüber 17 s der sonst gleichen Mischung, die statt Äthanol die gleiche Menge Wasser enthält, vgl. 8b). Feststoffgehalt: 31,3%.

Die Druckfarbe wird genau wie in den Beispielen 1 bis 5 mit einer Geschwindigkeit von 40 m/min auf Papier gedruckt und das bedruckte Papier bei 110° C im Trockenkanal getrocknet. Man erhält eine glatte, praktisch streifenfreie Beschichtung. Das Papier ist glatt und zeigt nur bei den Beschichtungen mit den Rastertiefen 40 und 34 μm eine geringe Rollneigung.

b) (Vergleich) Druckt man statt dessen eine nur mit Wasser hergestellte Druckfarbe mit sonst gleicher Konzentration unter den gleichen Bedingungen, so erhält man in dem Tiefdruckwerk ein feuchtes Papier, das nach Trocknung einen streifig-perligen Auftrag aufweist. Das Papier hat Falten in Wickelrichtung und zeigt eine starke Rollneigung, die mit dem Beschichtungsgewicht, d. h. mit der Rastertiefe, zunimmt.

Die Prüfung der nach a) und b) hergestellten Papiere lieferte das in Tabelle V angegebene Ergebnis.

Tabelle V

| Rasterwalze Rastertiefe | Druckfarbe | | | | |
| | a) Äthanol/Wasser | | b) Wasser (Vergleich) | | |
| | Beschich-tung | IDA 8. Durch-schrift | Beschich-tung | IDA 8. Durch-schrift |
| [μm] | [g/m$^2$] | [%] | [g/m$^2$] | [%] |
|---|---|---|---|---|
| 40 | 3,0 | 47[1]) | 3,8 | 48[2]) |
| 34 | 2,8 | 41[1]) | 3,0 | 40[2]) |
| 24 | 0,8 | 8 | 0,4 | 11 |
| 7 | 0 | 0 | 0 | 0 |

[1]) Gut lesbar.
[2]) Unleserlich.

### Beispiel 9

a) Die im Beispiel 8a) hergestellte Äthanol enthaltende Druckfarbe wird auf demselben Tiefdruckwerk jedoch mit einer Geschwindigkeit von 100 m/min gedruckt. Die Papiere sind trotz der kurzen Trockenstrecke (110° C) trocken. Die Beschichtung ist praktisch streifenfrei glatt. An den Stellen, an denen der Auftrag mit den 40 und 34 μm tiefen Rasters erfolgte, rollt sich das Papier etwas ein.

b) Es wird wie bei a) verfahren, jedoch wird die Druckfarbe des Beispiels 8b) verwendet. Man erhält sehr feuchte Papiere, die sofort Falten werfen und eine streifig-perlige Beschichtung tragen. Das trockene Papier rollt sich stark ein.

Die Beschichtungsgewichte und Intensitäten der Durchschriften sind in der Tabelle VI zusammengestellt.

13

Tabelle VI

| Rasterwalze Rastertiefe | Druckfarbe | | | | |
| --- | --- | --- | --- | --- | --- |
| | a) Äthanol/Wasser | | b) Wasser (Vergleich) | | |
| | Beschich-tung | IDA 8. Durch-schrift | Beschich-tung | IDA 8. Durch-schrift | |
| [μm] | [g/m$^2$] | [%] | [g/m$^2$] | [%] | |
| 40 | 3,2 | 48[1] | 3,1 | 47[2] | |
| 34 | 3,0 | 41[1] | 2,9 | 41[2] | |
| 24 | 0,3 | 10 | 0,5 | 12[2] | |
| 7 | O | O | O | O | |

[1] Gut lesbar.
[2] Streifig gerastert, Buchstaben nicht zu entziffern.

Trotz der höheren Laufgeschwindigkeit von 100 m/min ergibt sich ein praktisch unverändertes Auftragsgewicht.


Beispiel 10

Die Druckfarbe wird wie in Beispiel 8a) hergestellt, jedoch werden anstelle von 6 Teilen 9 Teile kalibrierte Stärke verwendet. Die Mischung hat eine Viskosität von 18 s.
Die Druckfarbe wird
a)  mit 40 m/min und
b)  mit 100 m/min aufgetragen.

Die Prüfungsergebnisse sind in der Tabelle VII zusammengestellt


Tabelle VII

| Rasterwalze Rastertiefe | Druckgeschwindigkeit | | | | |
| --- | --- | --- | --- | --- | --- |
| | a) 40 m/min | | b) 100 m/min | | |
| | Beschich-tung | IDA 8. Durch-schrift | Beschich-tung | IDA 8. Durch-schrift | |
| [μm] | [g/m$^2$] | [%] | [g/m$^2$] | [%] | |
| 40 | 3,0 | 47 | 3,8 | 48 | |
| 34 | 2,8 | 38 | 3,2 | 41 | |
| 24 | 0,5 | 11 | 1,4 | 9 | |
| 7 | O | O | O | O | |

Die Kapselbeschichtungen sind glatt und das Papier nicht verzogen. Es rollt sich an der Stelle mit der höchsten Beschichtung (40 μm Rastertiefe) etwas ein. Die Durchschriften mit den hohen IDA-Werten sind gut lesbar.

## Beispiel 11

Die Druckfarbe wird wie im Beispiel 8a) hergestellt, jedoch werden 9,0 Teile anstelle von 6,0 Teilen kalibrierter Stärke und anstelle der Mikrokapseldispersion 3 die gleiche Menge der Mikrokapseldispersion 4 (hergestellt nach II.4) verwendet.

Die Viskosität der Druckfarbe beträgt 17,6 s. Feststoffgehalt: 38,2%.

Diese Druckfarbe wird wie beim Beispiel 10a) mit 40 m/min, b) mit 100 m/min und c) mit 150 m/min auf Papier gedruckt. Man erhält eine glatte, streifenfreie Beschichtung. Das Papier ist glatt und zeigt nur bei den Beschichtungen mit den Rastertiefen von 40 und 34 μm eine geringe Rollneigung.

Die Prüfergebnisse der nach a), b) und c) erhaltenen Papiere sind in der Tabelle VIII zusammengestellt.

Tabelle VIII

| Raster-walze Raster-tiefe | Druckgeschwindigkeit | | | | | | | | |
|---|---|---|---|---|---|---|---|---|---|
| | a) 40 m/min | | | b) 100 m/min | | | c) 150 m/min | | |
| | Beschich-tung | IDA 1. | 8. Durchschrift | Beschich-tung | IDA 1. | 8. Durchschrift | Beschich-tung | IDA 1. | 8. Durchschrift |
| [μm] | [g/m$^2$] | [%] | | [g/m$^2$] | [%] | | [g/m$^2$] | [%] | |
| 40 | 2,5 | 42 | 50 | 2,6 | 42 | 49 | 2,5 | 43 | 52 |
| 34 | 2,4 | 37 | 43 | 2,6 | 37 | 42 | 1,9 | 36 | 43 |
| 24 | 1,0 | 11 | 12 | 0,6 | 12 | 13 | 0,4 | 12 | 12 |
| 7 | 0 | 0 | 0 | 0 | 0 | 0 | 0 | 0 | 0 |

Das Schriftbild der 8. Durchschrift der 40 und 34 μm Raster ist scharf und gut zu lesen. Hervorragend scharf und sauber ist das Schriftbild der ersten Durchschrift.

## Beispiel 12

Die Druckfarbe wird wie in Beispiel 8a angegeben, hergestellt, jedoch wird anstelle der Mikrokapseldispersion 3 die Mikrokapseldispersion 5 und anstelle von Äthanol die gleiche Menge an Methanol verwendet.

Die Viskosität der Druckfarbe beträgt 13,3 s. Feststoffgehalt: 32,4%.

Diese Druckfarbe wird genau wie im Beispiel 10a) mit 40 und b) mit 100 m/min Geschwindigkeit auf Papier gedruckt.

Man erhält eine glatte, streifenfreie Beschichtung. Das Papier ist glatt und zeigt nur bei den Rastertiefen von 40 und 34 μm eine geringe Rollneigung.

Die Prüfungsergebnisse der nach a) und b) erhaltenen Papiere ist in der Tabelle IX zusammengestellt.

Tabelle IX

| Raster-walze Raster-tiefe | Druckgeschwindigkeit | | | | | |
| | a) 40 m/min | | | b) 100 m/min | | |
| | Beschich-tung | IDA 1. | 8. Durchschrift | Beschich-tung | IDA 1. | 8. Durchschrift |
| [$\mu$m] | [g/m$^2$] | [%] | | [g/m$^2$] | [%] | |
| 40 | 2,6 | 35 | 40 | 2,6 | 36 | 43 |
| 34 | 2,0 | 31 | 35 | 2,2 | 32 | 37 |
| 24 | 0,6 | 7 | 8 | 0,7 | 9 | 9 |
| 7 | 0 | 0 | 0 | 0 | 0 | 0 |

Das Schriftbild der 8. Durchschrift der 40 und 34 $\mu$m Raster ist leicht gerastert, die Schrift jedoch gut zu lesen. Scharf und sauber ist das Schriftbild der 1. Durchschrift.

**Patentansprüche**

1. Stabile niedrigviskose Mikrokapseln und Bindemittel enthaltende wäßrige Druck- und Streichfarben, enthaltend neben in wäßrigen Druck- und Streichfarben üblichen Hilfsmitteln

(a) ein mit Wasser mischbares Lösungsmittel oder einem Lösungsmittelgemisch mit einem Siedepunkt von $\leq 100^\circ$C und

(b) Mikrokapseln von im Mittel 1 bis 8 $\mu$m Durchmesser, die durch Kondensation von Melamin und Formaldehyd oder Melamin-Formaldehyd-Vorkondensaten in einer wäßrigen Dispersion der festen oder flüssigen, in Wasser im wesentlichen nicht löslichen, den Kern bildenden Phase in einer wäßrigen Lösung eines Sulfonsäuregruppen tragenden Homo- oder Copolymeren bei pH von 3 bis 6,5 und Temperaturen von 20 bis 100$^\circ$C erhalten werden und wobei das Verhältnis von Melamin zu Formaldehyd von 1 : 1,5 bis 1 : 6 Mol und das Verhältnis von Harz zu Kernmaterial 1 : 13 bis 1 : 2 ist und wobei das Sulfonsäuregruppen tragende Polymere, das frei von Phenyl- und/oder Sulfophenylgruppen ist, einen K-Wert nach Fikentscher von 100 bis 170 oder eine Viskosität von 200 bis 5000 mPas bei einem Schergefälle von 489 s$^{-1}$ in 20gew.-%iger wäßriger Lösung bei 25$^\circ$ C aufweist.

2. Farbe gemäß Anspruch 1, dadurch gekennzeichnet, daß diese als (a) C$_1$- bis C$_3$-Alkanole enthält.

3. Farbe gemäß Anspruch 1 oder 2, dadurch gekennzeichnet, daß diese — bezogen auf die wäßrige Streich- oder Druckfarbe — 20 bis 65 Gew.-% (a) und 80 bis 35 Gew.-% einer wäßrigen Mikrokapseldispersion (b1), die mindestens 30 Gew.-%, bezogen auf die Dispersion, Feststoff enthält.

4. Farbe gemäß Anspruch 1 oder 2, dadurch gekennzeichnet, daß diese — bezogen auf die wäßrige Streich- oder Druckfarbe — 30 bis 50 Gew.-% (a) und 70 bis 50 Gew.-% (b1), die mindestens 30 Gew.-%, bezogen auf die Dispersion, Feststoff enthält.

5. Farbe gemäß Anspruch 3 oder 4, dadurch gekennzeichnet, daß die Mikrokapseldispersion (b1) einen Feststoffgehalt von 30 bis 60 Gew.-%, bezogen auf die Dispersion, aufweist.

6. Farbe gemäß Anspruch 3 oder 4, dadurch gekennzeichnet, daß die Mikrokapseldispersion (b1) einen Feststoffgehalt von 38 bis 55 Gew.-%, bezogen auf die Dispersion, aufweist.

7. Farbe gemäß den Ansprüchen 1 bis 6, dadurch gekennzeichnet, daß diese — bezogen auf die wäßrige Mikrokapseldispersion — als weitere übliche Hilfsmittel

(c) 0 bis 2,5 Gew.-% Dispergiermittel,
(d) 0 bis 30 Gew.-% Abstandshalter,
(e) 0 bis 15 Gew.-% eines weiteren in der flüssigen Phase löslichen oder dispergierbaren Bindemittels und/oder
(f) 0 bis 2,5 Gew.-% Polyäthylenglykol mit einem Molekulargewicht von 1000 bis 3000

enthält.

16

**0 036 101**

8. Mit den wäßrigen Druck- oder Streichfarben gemäß den Ansprüchen 1 bis 7 bedrucktes oder gestrichenes Papier.

9. Verwendung des mit wäßrigen Druck- oder Streichfarben gemäß den Ansprüchen 1 bis 7 bedruckten oder beschichteten Papier, in druckempfindlichen Kopiersystemen.

**Claims**

1. Stable aqueous printing inks and coating compositions of low viscosity containing microcapsules and binders, comprising, in addition to auxiliaries usually used in aqueous printing inks and coating compositions,

(a)  a water-miscible solvent or solvent mixture having a boiling point of $\leq 100°$C, and
(b)  microcapsules having a mean diameter of from 1 to 8 μm which are obtained by condensation of melamine and formaldehyde or melamine/formaldehyde precondensates in an aqueous dispersion of the solid or liquid, essentially water-insoluble phase forming the core, in an aqueous solution of a homopolymer or copolymer containing sulphonic acid groups, at a pH of from 3 to 6.5 and a temperature of from 20 to 100°C, the molar ratio of melamine to formaldehyde being from 1 : 1.5 to 1 : 6, and the ratio of resin to core material being from 1 : 13 to 1 : 2, and the polymer containing sulphonic acid groups, which is free from phenyl and/or sulphophenyl groups, having a K value according to Fikentscher of from 100 to 170 or a viscosity of from 200 to 5000 mPas at a shear gradient of 489 s$^{-1}$ in 20% strength by weight aqueous solution at 25°C.

2. A printing ink or coating composition as claimed in claim 1, containing alkanols of 1 to 3 carbon atoms as (a).

3. A printing ink or coating composition as claimed in claim 1 or 2, containing, based on the aqueous coating composition or printing ink, from 20 to 65% by weight of (a) and from 80 to 35% by weight of an aqueous microcapsule dispersion (b1) which contains at least 30% by weight, based on the dispersion, of solids.

4. A printing ink or coating composition as claimed in claim 1 or 2, containing, based on the aqueous coating composition or printing ink, from 30 to 50% by weight of (a) and from 70 to 50% by weight of (b1) which contains at least 30% by weight, based on the dispersion, of solids.

5. A printing ink or coating composition as claimed in claim 3 or 4, wherein the microcapsule dispersion (b1) has a solids content of from 30 to 60% by weight, based on the dispersion.

6. A printing ink or coating composition as claimed in claim 3 or 4, wherein the microcapsule dispersion (b1) has a solids content of from 38 to 55% by weight, based on the dispersion.

7. A printing ink or coating composition as claimed in claims 1 to 6, containing, based on the aqueous microcapsule dispersion, as further, usually used auxiliaries,

(c)  0 to 2.5% by weight of dispersant,
(d)  0 to 30% by weight of spacer material,
(e)  0 to 15% by weight of a further binder which is soluble or dispersible in the liquid phase, and/or
(f)   0 to 2.5% by weight of polyethylene glycol having a molekular weight of from 1000 to 3000.

8. Paper printed or coated with an aqueous printing ink or coating composition as claimed in claims 1 to 7.

9. The use of the paper printed or coated with an aqueous printing ink or coating composition as claimed in claims 1 to 7 in pressure-sensitive copying systems.

**Revendications**

1. Encre aqueuse d'imprimerie et à enduire renfermant des microcapsules et un liant, stable et faiblement visqueuse, caractérisée en ce qu'elle contient, outre des adjutants usuels pour des encres aqueuses d'imprimerie ou 'a enduire:

(a)  un solvant miscible avec l'eau ou un mélange de solvants ayant un point d'ébullition inférieur ou égal à 100°C, et
(b)  des microcapsules de 1 à 8 microns de diamètre en moyenne, qui sont obtenues par condensation de mélamine et de formaldéhyde ou de pré-condensats de mélamine-formaldéhyde, dans une dispersion aqueuse de la phase solide ou liquide, pratiquement insoluble dans l'eau, qui forme le noyau dans une solution aqueuse d'un homo- ou copolymère portant des groupes acide sulfonique, à un pH de 3 à 6,5 et à une température de 20 à 100°C, le rapport de la mélamine au formaldéhyde étant compris entre 1 : 1,5 et 1 : 6 mol et le rapport de la résine à la matière de noyau se situant entre 1 : 13 et 1 : 2, et le polymère qui porte des groupes acide sulfonique et qui est

17

exempt de groupes phényle et/ou sulfophényle présentant une valeur K du coefficient de l'équation de Fikentscher de 100 à 170 ou une viscosité de 200 à 5000 mPas pour une pente de cisaillement de 489 s$^{-1}$ en solution aqueuse à 20% en poids à 25°C.

2. Encre selon la revendication 1, caractérisée en ce qu'elle contient, en tant que (a), des alcanols en $C_1$ à $C_3$.

3. Encre selon la revendication 1 ou 2, caractérisée en ce qu'elle contient, par rapport à l'encre aqueuse à enduire ou d'imprimerie, 20 à 65% en poids de (a) et 80 à 35% en poids d'une dispersion aqueuse de microcapsules (b1) qui a une teneur en matières solides d'au moins 30% en poids par rapport à la dispersion.

4. Encre selon la revendication 1 ou 2, caractérisée en ce qu'elle contient, par rapport à l'encre aqueuse à enduire ou d'imprimerie, 30 à 50% en poids de (a) et 70 à 50% en poids de (b1) qui a une teneur en matières solides d'au moins 30% en poids par rapport à la dispersion.

5. Encre selon la revendication 3 ou 4, caractérisée en ce que la dispersion de microcapsules (b1) présente une teneur en matières solides de 30 à 60% en poids par rapport à la dispersion.

6. Encre selon la revendication 3 ou 4, caractérisée en ce que la dispersion de microcapsules (b1) présente une teneur en matières solides de 38 à 55% en poids par rapport à la dispersion.

7. Encre selon l'une quelconque des revendications 1 à 6, caractérisée en ce qu'elle contient, en tant qu'autres adjuvants usuels, par rapport 'a la dispersion aqueuse de microcapsules:

(c) 0 à 2,5% en poids d'agents de dispersion,
(d) 0 'a 30% en poids d'agents d'écartement,
(e) 0 à 15% en poids d'un autre liant susceptible d'être mis en solution ou en dispersion dans la phase liquide et/ou
(f) 0 à 2,5% en poids d'un polyéthylène-glycol ayant un poids moléculaire de 1000 à 3000.

8. Papier imprimé ou enduit avec les encres aqueuses d'imprimerie ou à enduire selon l'une quelconque des revendications 1 à 7.

9. Utilisation, dans des systèmes autocopiants réagissant à la pression, du papier imprimé ou enduit avec des encres aqueuses d'imprimerie ou à enduire selon l'une quelconque des revendications 1 à 7.